# EUROPEAN PATENT APPLICATION

(11) **EP 4 120 206 A1**
(43) Date of publication of application: **18.01.2023**
(21) Application number: 22184325.3
(22) Date of filing: 12.07.2022
(51) Int. Cl.: G06V 20/56

(54) **INFORMATION PROCESSING METHOD AND APPARATUS, ELECTRONIC DEVICE, STORAGE MEDIUM, AND PRODUCT**

(30) Priority: 30.07.2021 CN 202110871594
(71) Applicant: Apollo Intelligent Connectivity (Beijing) Technology Co., Ltd., Beijing 100176 (CN)
(72) Inventor: DENG, Sunan, BEIJING, 100176 (CN); ZHU, Bo, BEIJING, 100176 (CN)
(74) Representative: Bittner, Bernhard

(57) **Abstract**

The present disclosure provides an information processing method and apparatus, an electronic device, a storage medium and a product, which relate to the field of artificial intelligence, and in particular to the fields of autonomous driving and Internet of vehicles. The method includes: collecting a road image of a target road associated with a vehicle; identifying a road marking line of the target road according to the road image; determining a road type of the target road by using bending deformation information of the road marking line; and performing compensation processing on the vehicle based on the road type. According to the present disclosure, the specific road type is pre-judged by collecting the road image of the target road associated with the vehicle, so that the vehicle is compensated according to the road type, which improves the accuracy and timeliness of the road compensation.

## Description

### TECHNICAL FIELD

The present disclosure relates to the field of artificial intelligence technologies, and in particular to the fields of autonomous driving and Internet of vehicles.

### BACKGROUND

With the maturity of autonomous driving technologies, the functions of autonomous vehicles are becoming more and more perfect. In the travelling process of an autonomous vehicle, it is necessary to accurately judge the road conditions in front of the vehicle, to ensure the smooth operation of the vehicle. For example, the vehicle is accelerated when going uphill and the vehicle is decelerated when going downhill.

However, in practical applications, cameras and radars can only collect the road surface conditions of a small section of the road in front of the vehicle, and cannot accurately know the road conditions of the road to be travelled, which in turn causes the vehicle to fail to perform compensation control in time according to the road conditions of the road. The timeliness of vehicle control is low, which affects the user's ride experience.

### SUMMARY

An information processing method and apparatus, an electronic device, a storage medium and a product are provided by the present disclosure.

According to an aspect of the present disclosure, there is provided an information processing method, which includes:
collecting a road image of a target road associated with a vehicle;
identifying a road marking line of the target road according to the road image;
determining a road type of the target road by using bending deformation information of the road marking line; and
performing compensation processing on the vehicle based on the road type.

According to another aspect of the present disclosure, there is provided an information processing apparatus, which includes:
an image collection module, configured for collecting a road image of a target road associated with a vehicle;
an information identification module, configured for identifying a road marking line of the target road according to the road image;
a type obtaining module, configured for determining a road type of the target road by using bending deformation information of the road marking line; and
a first processing module, configured for performing compensation processing on the vehicle based on the road type.

According to another aspect of the present disclosure, there is provided an electronic device, which includes:
at least one processor; and a memory communicatively connected with the at least one processor, wherein the memory stores instructions executable by the at least one processor, and the instructions, when executed by the at least one processor, cause the at least one processor to perform any information processing method provided by the present disclosure.

According to another aspect of the present disclosure, there is provided a non-transitory computer-readable storage medium storing computer instructions, wherein the computer instructions, when executed by a computer, cause the computer to perform any information processing method provided by the present disclosure.

According to another aspect of the present disclosure, there is provided a computer program product including a computer program, wherein the computer program, when executed by a processor, implements any information processing method provided by the present disclosure.

According to the technical solution of the present disclosure, the road image of the target road associated with the vehicle is collected, and the road marking line of the target road is identified according to the road image, to obtain a mathematical object that can accurately identify the road conditions. Thereby, the road type of the target road is determined by using the bending deformation information of the road marking line, and the compensation process is performed on the vehicle based on the road type. By collecting the road image of the target road associated with the vehicle, the specific road type can be pre-judged, so that the vehicle can be compensated according to the road type, which improves the accuracy and timeliness of road compensation, and improves the user's ride experience.

It should be understood that the content described in this section is not intended to limit the key or important features of the embodiments of the present disclosure, nor is it intended to limit the scope of the present disclosure. Other features of the present disclosure will be easily understood through the following description.

### BRIEF DESCRIPTION OF THE DRAWINGS

The drawings are used to better understand the solution and do not constitute a limitation to the present disclosure, wherein:
FIG. 1 is a schematic diagram of an information processing method according to a first embodiment of the present disclosure;
FIG. 2 is a schematic diagram of an information processing method according to a second embodiment of the present disclosure;
FIG. 3 is a schematic diagram of an information processing method according to a third embodiment of the present disclosure;
FIG. 4 is a schematic diagram of an information processing apparatus according to a fourth embodiment of the present disclosure;
FIG. 5 is a schematic diagram of a lane line according to an embodiment of the present disclosure;
FIG. 6 is a schematic diagram of vehicle compensation according to an embodiment of the present disclosure;
FIG. 7 is a schematic diagram of an information processing apparatus according to a fifth embodiment of the present disclosure; and
FIG. 8 is a block diagram of an electronic device for implementing an information processing method according to an embodiment of the present disclosure.

### DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and conciseness.

The embodiments of the present disclosure can be applied to autonomous vehicles. By collecting an image of a target road associated with a vehicle, and then performing pattern recognition on the collected image, a road type is obtained. The vehicle is controlled according to the road type, to realize the real-time control of the vehicle, which improves the timeliness of the vehicle control.

In the existing vehicle control, a camera or radar of the vehicle can collect a small section of the road in front of the vehicle, but neither the camera nor the radar can specifically identify the road surface conditions, thus the vehicle cannot decelerate in time. Moreover, the collection range of the camera or radar is limited, and the camera or radar cannot collect a road surface of a road section that is far away from the vehicle, that is, the road surface beyond the collection range thereof, thus the vehicle cannot know the road surface conditions ahead in time, nor can it take corresponding control measures in time, resulting in poor vehicle control timeliness and reduced control effectiveness.

In order to solve this technical problem, in the embodiment of the present disclosure, the road image of the target road associated with the vehicle is collected, and the road marking line of the target road is identified according to the road image, to obtain a mathematical object that can accurately identify the road conditions of the road. Therefore, the road type of the target road is determined by using the bending deformation information of the road marking line, and in a case where the road type is a gradient type or a jitter type, compensation processing is performed on the vehicle. By collecting the road image of the target road of the vehicle, the specific road type is pre-judged, so that the vehicle is compensated according to the road type, which improves the accuracy and timeliness of road compensation.

The technical solutions of the embodiments of the present disclosure will be described in detail below with reference to the accompanying drawings.

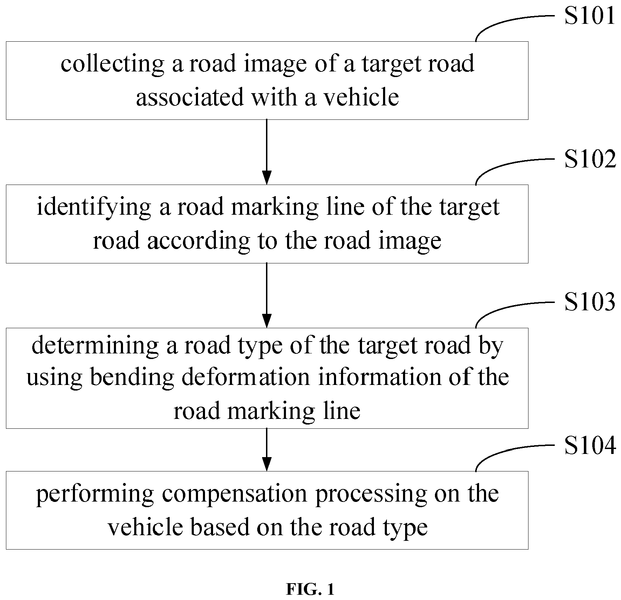

As shown in FIG. 1, which is a schematic diagram of an information processing method according to an first embodiment of the present disclosure, the method can include:
S101: collecting a road image of a target road associated with a vehicle.

Optionally, the vehicle may include an autonomous vehicle.

The target road can be a long section of the road in front of the vehicle. Herein, long may mean that the length of the section of the road is larger than a preset length threshold. The road image of the target road can be collected in real time. During the travelling process of the vehicle, the road image of the target road far away from the vehicle is collected in real time, and the travelling process in the target road in front of the vehicle can be pre-controlled during the travelling process of the vehicle, improving the effectiveness of vehicle control.

Herein, the first way of collecting the road image can be: collecting the target road by using an image acquisition device such as a camera, a radar located and the like on the vehicle, to obtain the road image.

The second way of collecting the road image can be: collecting and obtaining images of all roads by using cameras located on all the roads, and establishing a corresponding relationship between the collected road images and the roads. According to the position of the vehicle, the target road corresponding to the vehicle is determined, and then the road image of the target road corresponding to the vehicle is determined according to the corresponding relationship between the road and the road image. Herein, different roads can be distinguished by road signs. Each road can refer to a section of a road from the starting point of the road to the ending point of the road. All roads may refer to the sum of roads within the drivable area of the vehicle. In practical applications, the respective cameras of all roads can send the collected images to a server, such as a cloud server. The server can store road images of all roads. When acquiring the road image of the target road corresponding to the vehicle, a request for acquiring the image of the target road can be initiated to the server, and then the road image of the target road fed back by the server can be received.

The road image may be collected in a variety of ways. The collection ways in the present disclosure are merely exemplary, and should not constitute a specific limitation on the ways of collecting the road image in the present disclosure. Any other way of collecting the road image in the art suitable for the present disclosure can all be applied to the embodiments of the present disclosure.

S102: identifying a road marking line of the target road according to the road image.

Herein, the identifying the road marking line of the target road according to the road image may include: identifying the road marking line of the target road in the road image by using an image processing algorithm. The road marking line can be a line segment marking the road shape of the target road, and can be a straight line or a curved line.

The image processing algorithm can be an existing visual recognition algorithm, such as an image feature-based detection algorithm, a model-based detection algorithm, etc., specifically, a lane line detection algorithm based on Hough transform or Gabor transform. In the embodiment of the present disclosure, the specific identification method of the road marking line is not limited too much.

S103: determining a road type of the target road by using bending deformation information of the road marking line.

The bending deformation information may be a content that identifies the bending deformation condition of the road. The road type can be accurately determined by recognizing the bending deformation information of the road marking line.

Optionally, the road type may include a straight-line type as well as a gradient type or a jitter type.

For the straight-line type of target road, the vehicle can travel straight along the road, and no compensation processing may be performed on the vehicle. Of course, in practical applications, in a case where the identified road type is the straight-line type and there are few vehicles travelling on the target road, the vehicle can be accelerated; in a case where the identified road type is the straight-line type and there are many vehicles travelling on the target road, the vehicle can be decelerated.

S104: performing compensation processing on the vehicle based on the road type.

When the road type is the gradient type or the jitter type, compensation processing can be performed on the vehicle, to reduce the jitter or unsafe factors generated by the gradient type or jitter type of road, improving the stability and safety of the vehicle.

Optionally, the road type may include at least one of the jitter type, the gradient type, and a curve type. The curve type may specifically include an included angle curve, a U-shaped curve, a compound curve, and the like.

In a case where the road type is the curve type, the performing the compensation processing on the vehicle may specifically include: decelerating the vehicle in a case where the road type is the curve type. In a possible design, when decelerating the vehicle, the decrement of the vehicle speed may be determined according to the bending angle of the curve, and the vehicle may be decelerated according to the decrement of the vehicle speed.

In practical applications, in order to improve the timeliness of vehicle compensation and improve the driving efficiency of the vehicle, the abnormal road segment in the target road, which causes the target road to be the gradient type or the jitter type, can be determined. At the compensation moment before the vehicle reaches the abnormal road segment, the compensation processing is performed on the vehicle. Optionally, the compensation moment before the vehicle reaches the abnormal road segment may be determined by: calculating the travel time obtained according to the driving speed of the vehicle and the distance between the vehicle and the starting point of the abnormal road segment; calculating the difference between the travel time and preset compensation starting time, to obtain the normal travel time; and calculating the sum of the normal travel time and the current moment, to obtain the compensation moment.

In the embodiment of the present disclosure, the road image of the target road associated with the vehicle is collected, and the road marking line of the target road is identified according to the road image, to obtain a mathematical object that can accurately identify the road conditions. Thereby, the road type of the target road is determined by using the bending deformation information of the road marking line, and compensation process is performed on the vehicle based on the road type. By collecting the road image of the target road of the vehicle, the specific road type can be pre-judged, so that the vehicle can be compensated according to the road type, which improves the accuracy and timeliness of road compensation.

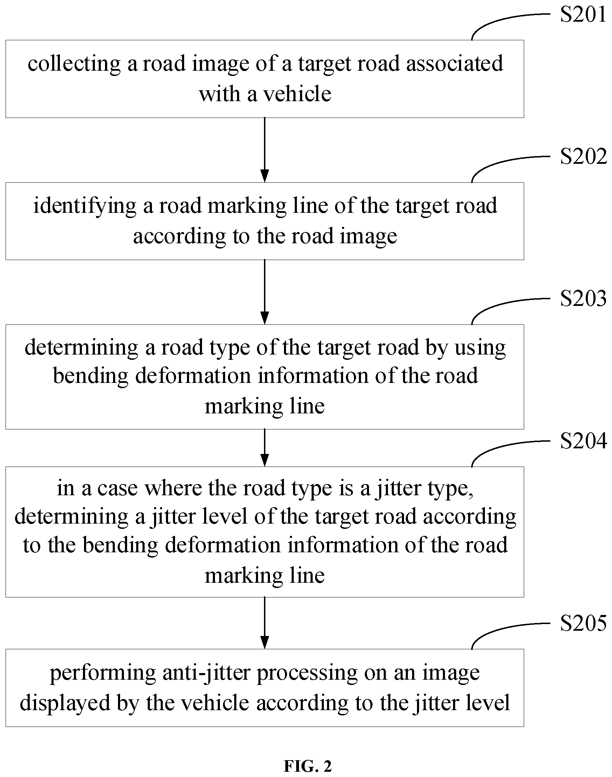

As shown in FIG. 2, which is a schematic diagram of an information processing method according to the second embodiment of the present disclosure, the method may include:
S201: collecting a road image of a target road associated with a vehicle;
S202: identifying a road marking line of the target road according to the road image;
S203: determining a road type of the target road by using bending deformation information of the road marking line;
S204: in a case where the road type is a jitter type, determining a jitter level of the target road according to the bending deformation information of the road marking line; and
S205: performing anti-jitter processing on an image displayed by the vehicle according to the jitter level.

Optionally, the image displayed by the vehicle may be an electronic map showing the target road. The vehicle may be equipped with a display device for the electronic map, such as an Augmented Reality Head Up Display (AR HUD), a display screen, a vehicle-mounted device, a mobile phone, a tablet computer, etc. The specific type of the display device is not limited in the present disclosure.

Taking the AR HUD as an example, the performing the anti-jitter processing on the image displayed by the vehicle may specifically include: determining the screen length and the screen height of the display screen of the AR HUD, determining the display scale and/or the height adjustment amount of the image on the AR HUD, and adjusting the image displayed by the AR HUD according to the display scale and/or the height adjustment amount. Generally, the higher the jitter level, the smaller the display scale of the image can be, and the map that is farther away from the vehicle is displayed for the user, making the map display more stable. The height adjustment amount may be the adjustment amount of the distance between the virtual position of the vehicle in the display screen of the AR HUD and the top edge of the display screen. The higher the jitter level, the greater the height adjustment amount, and the greater the distance between the top edge of the display screen of the AR HUD and the vehicle in the display screen of the AR HUD, so that the display range of the electronic map is larger, thus the electronic map does not jitter due to the relative small display range of the map, thereby ensuring the stability of display.

In the present disclosure, in a case where the road type is the jitter type, the jitter level of the target road is determined according to the bending deformation information of the road marking line, and then the anti-jitter processing is performed on the image displayed by the vehicle according to the jitter level. Corresponding anti-jitter processing is performed on the vehicle according to different jitter levels, achieving finer anti-jitter processing on the image displayed by the vehicle, so that the display of the image is more stable and the display efficiency is improved.

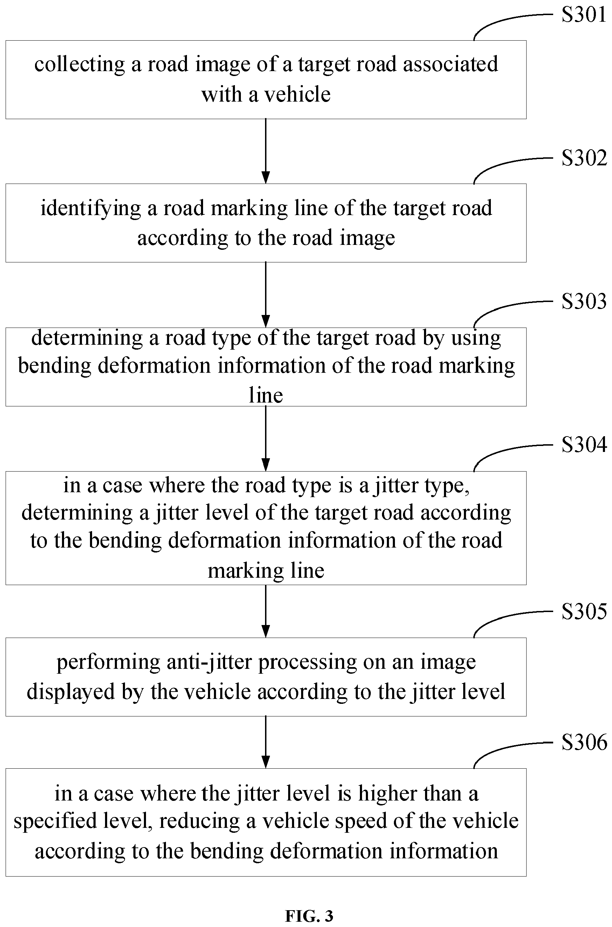

As shown in FIG. 3, which is a schematic diagram of an information processing method according to the third embodiment of the present disclosure, the method may include:
S301: collecting a road image of a target road associated with a vehicle;
S302: identifying a road marking line of the target road according to the road image;
S303: determining a road type of the target road by using bending deformation information of the road marking line; and
S304: in a case where the road type is a jitter type, determining a jitter level of the target road according to the bending deformation information of the road marking line.

Optionally, the bending deformation information of the road marking line may include: the bending deformation type and the frequency at which the bending deformation occurs.

The bending deformation type of the road marking line can be obtained by analyzing the shape of the road marking line. The bending deformation type may include at least one of a concave curve type and a convex curve type.

In a case where the bending deformation type of the road marking line includes both the concave curve type and the convex curve type, the road type is determined to be the jitter type. In a case where the bending deformation type of the road marking line includes a concave curve type, the road type can be determined to be a downhill type. In a case where the bending deformation type of the road marking line includes the convex curve type, the road type can be determined to be an uphill type.

The bending deformation frequency can be determined according to curvature data of the target road. The jitter level can be determined based on the bending deformation frequency. The higher the bending deformation frequency, the higher the jitter level, and the lower the bending deformation frequency, the lower the jitter level.

S305: performing anti-jitter processing on an image displayed by the vehicle according to the jitter level.

S306: in a case where the jitter level is higher than a specified level, reducing a vehicle speed of the vehicle according to the bending deformation information.

In some embodiments, the corresponding relationship between the jitter level and the decrement of the vehicle speed may be established in advance. Thus, in a case where the jitter level is higher than the specified level, the reducing the vehicle speed of the vehicle according to the bending deformation information may include: in a case where the jitter level is higher than the specified level, determining the target decrement of the vehicle speed by using the corresponding relationship between the jitter level and the decrement of the vehicle speed. The vehicle speed of the vehicle is reduced according to the target decrement.

In the embodiment of the present disclosure, in a case where the road type is the jitter type, in addition to performing the anti-jitter processing on the image displayed by the vehicle, the vehicle speed of the vehicle can be reduced according to the bending deformation information in a case where the jitter level is higher than a specified level, to realize deceleration processing of the vehicle driving, which improves the stability of the vehicle driving. In a case where the road marking line that recognizes the road image of the vehicle is used, the road type is determined to be the jitter type according to the road marking line, and the jitter level is higher than the specified level, the speed of the vehicle is reduced, realizing the pre-control of the vehicle driving, and improving the compensation efficiency of the vehicle.

In practical applications, performing the anti-jitter processing on the image displayed by the vehicle and decelerating the vehicle can also be implemented separately. That is, in a case where the road type is the jitter type, the performing the compensation processing on the vehicle may include: in a case where the road type is the jitter type, determining the jitter level of the target road according to the bending deformation information of the road marking line; and in a case where the jitter level is higher than a specified level, reducing the vehicle speed of the vehicle according to the bending deformation information.

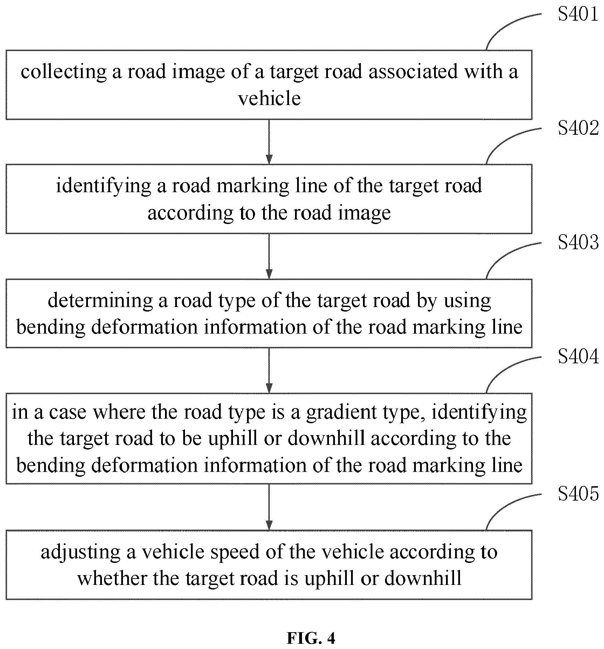

As shown in FIG. 4, which is a schematic diagram of an information processing method according to the fourth embodiment of the present disclosure, the method may include:
S401: collecting a road image of a target road associated with a vehicle;
S402: identifying a road marking line of the target road according to the road image;
S403: determining a road type of the target road by using bending deformation information of the road marking line; and
S404: in a case where the road type is a gradient type, identifying the target road to be uphill or downhill according to the bending deformation information of the road marking line.

Optionally, the identifying the target road to be uphill or downhill according to the bending deformation information of the road marking line may include: identifying the target road to be uphill or downhill according to the bending deformation type in the bending deformation information of the road marking line.

S405: adjusting a vehicle speed of the vehicle according to whether the target road is uphill or downhill.

In the embodiment of the present disclosure, in a case where the road type is the gradient type, the target road is identified to be uphill or downhill according to the bending deformation information of the road marking line, and the road type is adjusted correspondingly according to the gradient type, so as to improve the accuracy and validity of adjustment.

As a possible implementation, in S405, the adjusting the vehicle speed of the vehicle according to whether the target road is uphill or downhill may include:
in a case where the target road is uphill, determining a corresponding increment according to the bending deformation information, and increasing the vehicle speed of the vehicle according to the increment; and
in a case where the target road is downhill, determining a corresponding decrement according to the bending deformation information, and reducing the vehicle speed of the vehicle according to the decrement.

In the embodiment of the present disclosure, after the gradient type of the road is determined, the increment of the vehicle speed or the decrement of the vehicle speed is determined by using the bending deformation information, so as to realize the accurate acquisition of the speed change of the vehicle, and realize the accurate adjustment of the driving speed of the vehicle, improving adjustment accuracy.

Optionally, the increment may be an increased amount relative to the current speed of the vehicle. The decrement may be a reduced amount relative to the current speed of the vehicle.

In some embodiments, in a case where the road type is the gradient type, the anti-jitter processing may further be performed on the image displayed by the vehicle.

As a possible implementation, in a case where the road type is the gradient type, further performing the anti-jitter processing on the image displayed by the vehicle may include: in a case where the road type is the gradient type, identifying the target road to be uphill or downhill according to the bending deformation information of the road marking line. According to whether the target road is uphill or downhill, the anti-jitter processing is performed on the image displayed by the vehicle.

Optionally, in a case where the target road is uphill, the image displayed by the vehicle is lowered. In a case where the target road is downhill, the image displayed by the vehicle is lifted. Herein, lowering the image displayed by the vehicle may include: controlling the distance of the target road in the electronic map displayed by the vehicle relative to the top edge of the display screen to be increased. Lifting the image displayed by the vehicle may include: controlling the distance of the target road in the electronic map displayed by the vehicle relative to the top edge of the display screen to be decreased.

As a possible implementation, before determining the road type of the target road by using the bending deformation information of the road marking line, the method may include:
calculating a curvature and a curvature change of the road marking line, to obtain the bending deformation information of the road marking line.

In the embodiment of the present disclosure, the bending deformation information of the road marking line is obtained by calculating the curvature and the curvature change of the road marking line. The bending deformation information is obtained according to the curvature and the curvature change, so as to realize the accurate acquisition of the bending deformation information of the road marking line, and then accurately determine the road type to realize the accurate control of the vehicle.

In an implementation, the road marking line involved in the present disclosure may include at least one of:
a lane line, a road edge line, or an isolation belt.

In the embodiment of the present disclosure, a feature such as the lane line, the road edge line, or the isolation belt that can mark the specific trend of the road is used to realize the accurate definition of the road marking line.

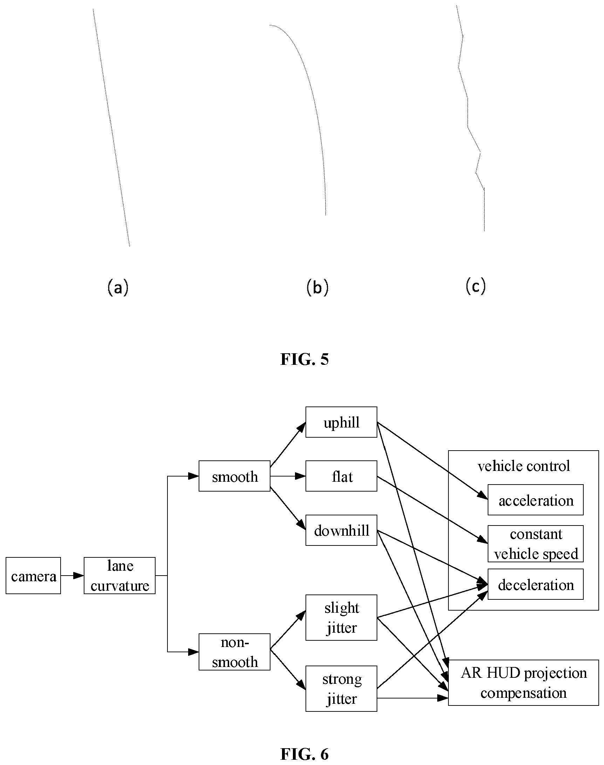

FIG. 5 is a schematic diagram of a lane line according to an embodiment of the present disclosure. As shown in FIG. 5, the road type may include: a straight-line type and a gradient type or a jitter type. (a) of FIG. 5 corresponds to a road of the straight-line type, so the identified road marking line is a straight line. (b) of FIG. 5 corresponds to a road of the gradient type, so the identified road marking line is a relatively smooth curve. (c) of FIG. 5 corresponds to a road of the jitter type, such as uneven road surface, partial road collapse, etc., so the identified road marking line is a curve with a changing curvature.

FIG. 6 is a schematic diagram of vehicle compensation according to an embodiment of the present disclosure. As shown in FIG. 6, the road marking line, such as a lane line, is identified according to the collected road image, and the road type, including a smooth type and a non-smooth type, can be determined by the curvature of the lane line. Herein, the smooth type include: uphill, flat, and downhill, and the corresponding vehicle controls are acceleration, constant vehicle speed and deceleration respectively. The non-smooth type include: slight jitter and strong jitter, both of which can be adjusted for deceleration of the vehicle speed. In addition, AR HUD projection compensation can also be performed for both the above-mentioned smooth and non-smooth types, that is, the anti-jitter processing is performed on the displayed image, thereby improving user experience.

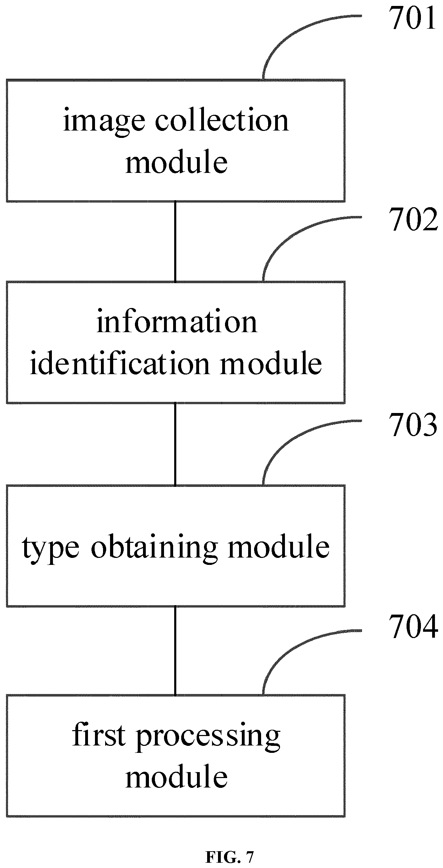

As shown in FIG. 7 , which is a schematic diagram of an information processing apparatus provided in a fifth embodiment of the present disclosure, the apparatus may include:
an image collection module 701, configured for collecting a road image of a target road associated with a vehicle;
an information identification module 702, configured for identifying a road marking line of the target road according to the road image;
a type obtaining module 703, configured for determining a road type of the target road by using bending deformation information of the road marking line; and
a first processing module 704, configured for performing compensation processing on the vehicle based on the road type.

In the embodiment of the present disclosure, the road image of the target road associated with the vehicle is collected, and the road marking line of the target road is identified according to the road image, to obtain a mathematical object that can accurately identify the road conditions. Thereby, the road type of the target road is determined by using the bending deformation information of the road marking line, and the compensation process is performed on the vehicle based on the road type. By collecting the road image of the target road associated with the vehicle, the specific road type can be pre-judged, so that the vehicle can be compensated according to the road type, which improves the accuracy and timeliness of road compensation.

In an implementation, the first processing module may include:
a first determination unit, configured for, in a case where the road type is a jitter type, determining a jitter level of the target road according to the bending deformation information of the road marking line; and
a first processing unit, configured for performing anti-jitter processing on an image displayed by the vehicle according to the jitter level.

In an implementation, the first processing module may further include:
a second processing unit, configured for, in a case where the jitter level is higher than a specified level, reducing a vehicle speed of the vehicle according to the bending deformation information.

In an implementation, the first processing module may further include:
a gradient determination unit, configured for, in a case where the road type is a gradient type, identifying the target road to be uphill or downhill according to the bending deformation information of the road marking line; and
a third processing unit, configured for adjusting a vehicle speed of the vehicle according to whether the target road is uphill or downhill.

In an implementation, the third processing unit includes:
an acceleration subunit, configured for, in a case where the target road is uphill, determining a corresponding increment according to the bending deformation information, and increasing the vehicle speed of the vehicle according to the increment; and
a deceleration subunit, configured for, in a case where the target road is downhill, determining a corresponding decrement according to the bending deformation information, and reducing the vehicle speed of the vehicle according to the decrement.

In an implementation, the apparatus may further include:
an information calculation module, configured for calculating a curvature and a curvature change of the road marking line, to obtain the bending deformation information of the road marking line.

In an implementation, the road marking line may include at least one of:
a lane line, a road edge line, or an isolation belt.

For the functions of respective units, modules, or sub-modules in each device in the embodiment of the present disclosure, reference may be made to the corresponding description in the foregoing method embodiment, and details are not described herein again.

In the technical solution of the present disclosure, the acquisition, storage and application of the user's personal information involved are in compliance with the provisions of relevant laws and regulations, and do not violate public order and good customs.

According to embodiments of the present disclosure, the present disclosure also provides an electronic device, a readable storage medium, and a computer program product.

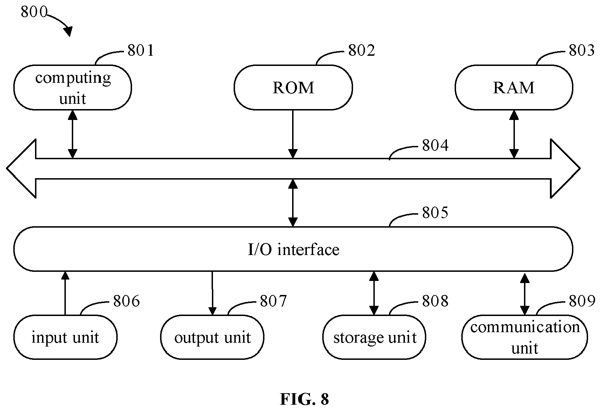

FIG. 8 shows a schematic diagram of an example electronic device 800 that may be configured for implementing the embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present disclosure described and/or claimed herein.

As shown in FIG. 8, the electronic device 800 includes a computing unit 801 that may perform various suitable actions and processes in accordance with computer programs stored in a read only memory (ROM) 802 or computer programs loaded from a storage unit 808 into a random access memory (RAM) 803. In the RAM 803, various programs and data required for the operation of the electronic device 800 may also be stored. The computing unit 801, the ROM 802 and the RAM 803 are connected to each other through a bus 804. An input/output (I/O) interface 805 is also connected to the bus 804.

A plurality of components in the electronic device 800 are connected to the I/O interface 805, including: an input unit 806, such as a keyboard, a mouse, etc.; an output unit 807, such as various types of displays, speakers, etc.; a storage unit 808, such as a magnetic disk, an optical disk, etc.; and a communication unit 809, such as a network card, a modem, a wireless communication transceiver, etc. The communication unit 809 allows the electronic device 800 to exchange information/data with other devices over a computer network, such as the Internet, and/or various telecommunications networks.

The computing unit 801 may be various general purpose and/or special purpose processing assemblies having processing and computing capabilities. Some examples of the computing unit 801 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 801 performs various methods and processes described above, such as the information processing method. For example, in some embodiments, the information processing method may be implemented as computer software programs that are physically contained in a machine-readable medium, such as the storage unit 808. In some embodiments, some or all of the computer programs may be loaded into and/or installed on the electronic device 800 via the ROM 802 and/or the communication unit 809. In a case where the computer programs are loaded into the RAM 803 and executed by the computing unit 801, one or more of steps of the information processing method may be performed. Alternatively, in other embodiments, the computing unit 801 may be configured to perform the information processing method in any other suitable manner (e.g., by means of a firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the present disclosure may be written in any combination of one or more programming languages. These program codes may be provided to a processor or controller of a general purpose computer, a special purpose computer, or other programmable data processing apparatus such that the program codes, when executed by the processor or controller, cause the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other. The server can be a cloud server, a distributed system server, or a server combined with a blockchain.

It should be understood that the steps can be reordered, added or deleted using the various flows illustrated above. For example, the steps described in the present disclosure may be performed concurrently, sequentially or in a different order, so long as the desired results of the technical solutions disclosed in the present disclosure can be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of the present disclosure are intended to be included within the scope of the present disclosure.

## Claims

1. An information processing method, comprising:
collecting (S101, S201, S301, S401) a road image of a target road associated with a vehicle;
identifying (S102, S202, S302, S402) a road marking line of the target road according to the road image;
determining (S103, S203, S303, S403) a road type of the target road by using bending deformation information of the road marking line; and
performing (S104) compensation processing on the vehicle based on the road type.

2. The method of claim 1, wherein the performing (SI04) the compensation processing on the vehicle based on the road type, comprises:
in a case where the road type is a jitter type, determining (S204, S304) a jitter level of the target road according to the bending deformation information of the road marking line; and
performing (S205, S305) anti-jitter processing on an image displayed by the vehicle according to the jitter level.

3. The method of claim 2, further comprising:
in a case where the jitter level is higher than a specified level, reducing (S306) a vehicle speed of the vehicle according to the bending deformation information.

4. The method of any one of claims 1 to 3, wherein the performing (S104) the compensation processing on the vehicle based on the road type, comprises:
in a case where the road type is a gradient type, identifying (S404) the target road to be uphill or downhill according to the bending deformation information of the road marking line; and
adjusting (S405) a vehicle speed of the vehicle according to whether the target road is uphill or downhill.

5. The method of claim 4, wherein the adjusting (S405) the vehicle speed of the vehicle according to whether the target road is uphill or downhill, comprises:
in a case where the target road is uphill, determining a corresponding increment according to the bending deformation information, and increasing the vehicle speed of the vehicle according to the increment; and
in a case where the target road is downhill, determining a corresponding decrement according to the bending deformation information, and reducing the vehicle speed of the vehicle according to the decrement.

6. The method of any one of claims 1 to 5, further comprising:
calculating a curvature and a curvature change of the road marking line, to obtain the bending deformation information of the road marking line.

7. The method of any one of claims 1 to 6, wherein the road marking line comprises at least one of a lane line, a road edge line, or an isolation belt.

8. An information processing apparatus, comprising:
an image collection module (701), configured for collecting a road image of a target road associated with a vehicle;
an information identification module (702), configured for identifying a road marking line of the target road according to the road image;
a type obtaining module (703), configured for determining a road type of the target road by using bending deformation information of the road marking line; and
a first processing module (704), configured for performing compensation processing on the vehicle based on the road type.

9. The apparatus of claim 8, wherein the first processing module (704) comprises:
a first determination unit, configured for, in a case where the road type is a jitter type, determining a jitter level of the target road according to the bending deformation information of the road marking line; and
a first processing unit, configured for performing anti-jitter processing on an image displayed by the vehicle according to the jitter level,
optionally, wherein the first processing module (704) further comprises:
a second processing unit, configured for, in a case where the jitter level is higher than a specified level, reducing a vehicle speed of the vehicle according to the bending deformation information.

10. The apparatus of claim 8 or 9, wherein the first processing module (704) comprises:
a gradient determination unit, configured for, in a case where the road type is a gradient type, identifying the target road to be uphill or downhill according to the bending deformation information of the road marking line; and
a third processing unit, configured for adjusting a vehicle speed of the vehicle according to whether the target road is uphill or downhill,
optionally, wherein the third processing unit comprises:
an acceleration subunit, configured for, in a case where the target road is uphill, determining a corresponding increment according to the bending deformation information, and increasing the vehicle speed of the vehicle according to the increment; and
a deceleration subunit, configured for, in a case where the target road is downhill, determining a corresponding decrement according to the bending deformation information, and reducing the vehicle speed of the vehicle according to the decrement.

11. The apparatus of any one of claims 8 to 10, further comprising:
an information calculation module, configured for calculating a curvature and a curvature change of the road marking line, to obtain the bending deformation information of the road marking line.

12. The apparatus of any one of claims 8 to 11, wherein the road marking line comprises at least one of a lane line, a road edge line, or an isolation belt.

13. An electronic device, comprising:
at least one processor; and
a memory communicatively connected with the at least one processor, wherein
the memory stores instructions executable by the at least one processor, and the instructions, when executed by the at least one processor, cause the at least one processor to perform the method of any one of claims 1 to 7.

14. A non-transitory computer-readable storage medium storing computer instructions, wherein the computer instructions, when executed by a computer, cause the computer to perform the method of any one of claims 1 to 7.

15. A computer program product comprising a computer program, wherein the computer program, when executed by a processor, implements the method of any one of claims 1 to 7.
